(19) Europäisches Patentamt
European Patent Office
Office européen des brevets

(11) **EP 0 710 422 B1**

(12) **EUROPEAN PATENT SPECIFICATION**

(45) Date of publication and mention
of the grant of the patent:
**30.09.1998 Bulletin 1998/40**

(21) Application number: **94921048.8**

(22) Date of filing: **19.07.1994**

(51) Int Cl.⁶: **H04N 7/26**, H04N 7/30

(86) International application number:
**PCT/GB94/01558**

(87) International publication number:
**WO 95/03674 (02.02.1995 Gazette 1995/06)**

(54) **DETECTING ERRORS IN VIDEO IMAGES**

FEHLERERKENNUNG IN VIDEOBILDERN

DETECTION D'ERREURS DANS DES IMAGES VIDEO

(84) Designated Contracting States:
**BE CH DE DK ES FR GB IT LI NL SE**

(30) Priority: **19.07.1993 EP 93305646**

(43) Date of publication of application:
**08.05.1996 Bulletin 1996/19**

(73) Proprietor: **BRITISH TELECOMMUNICATIONS
public limited company
London EC1A 7AJ (GB)**

(72) Inventors:
• **MURPHY, Angela, Ruth
Chelmsford Essex CM3 2JG (GB)**
• **GUNBY, Stephen, Richard
Clacton-on-Sea Essex CO15 3HJ (GB)**

(74) Representative: **Lloyd, Barry George William et al
BT Group Legal Services,
Intellectual Property Department,
8th Floor, Holborn Centre,
120 Holborn
London EC1N 2TE (GB)**

(56) References cited:
**EP-A- 0 415 699          US-A- 4 807 033
US-A- 5 150 210**

• **INTERNATIONAL CONFERENCE ON
COMMUNICATION '91, vol.1, 23 June 1991,
DENVER, CO, USA pages 496 - 500, XP269448
F.C. JENG ET AL. 'Concealment of Bit Error and
Cell Loss in Inter-Frame Coded Video
Transmission'**
• **PATENT ABSTRACTS OF JAPAN vol. 15, no. 261
(E-1085) 3 July 1991 & JP,A,03 085 820
(MATSUSHITA ELECTRIC IND. CO. LTD.) 11 April
1991**
• **PATENT ABSTRACTS OF JAPAN vol. 16, no. 288
(E-1223) 25 June 1992 & JP,A,04 072 985
(TOSHIBA CORP.) 6 March 1992**

## Description

The present invention relates to detecting errors in signals representing video images.

In addition to the broadcasting and storage of full bandwidth video signals, interest has also developed in techniques for reducing the bandwidth requirement for the transmission or storage of a video signal. These techniques facilitate, amongst other things, two-way transmission of video signals, leading to the development of affordable video conferencing facilities and video telephones.

A problem with compressing video data for transmission over limited bandwidth transmission paths, is that the data becomes more susceptible to the presence of transmission errors. The nature of the transmission path will be such that errors usually cannot be prevented and in order to improve the overall result of transmitted images, it would be preferable to identify the presence of errors, and their locations within the video image and, where possible, take action to conceal these errors.

One method for detecting errors comprises including an error correction code as an overhead. Cyclic redundancy codes are widely used for error detection at the expense of a small overhead in the transmitted signal.

If the error correction code is corrupted during transmission, this is detected at a receiver and the corrupted data replaced, for instance as described in US-A-5150210 and EP-A-0415699.

The present invention seeks to provide an improved method and apparatus for detecting the presence of errors in a video signal, (see also US-A-4 807 033).

According to a first aspect of the present invention, there is provided a method of detecting an error in a signal representing a video image, comprising:

receiving blocks of frequency related coefficients representing respective blocks in the video image; and
analysing the statistical distribution of said coefficients within a block to detect the presence of corrupted data.

In a preferred embodiment, said analysing step involves calculating the variance of said coefficients in a block. Variance is determined by calculating the difference between actual coefficient values and the mean value, forming the square of said difference and summing said squares, i.e.

$$\sigma = \sum_{i=1}^{N} \left( x_i - \overline{x} \right)^2$$

where

$\sigma =$ variance
$x_i =$ value of the ith coefficient
$\overline{x} =$ mean value of all the coefficents within a block
$N =$ number of coefficients in a block

The variance may be compared against a predetermined threshold and an error identified if the variance is greater than said threshold. Alternatively or additionally, the variance values for the blocks of a frame may be stored and the variance for a block under consideration may be compared with the variance of the block in a previous frame that is similarly positioned and/or for the surrounding blocks of the previous frame. A mean variance value may be calculated for the blocks of the previous frame and an error detected if the variance value under consideration is significantly larger or significantly smaller than the mean value for the previous frame.

If the transmission coding scheme employs frequency related coefficients which represent the actual values of the pixels within a block, for example the video signal is intraframe coded using DCT coefficients only, the mathematical distribution of the transmitted coefficients may be directly analysed. However the coding scheme employed might not result in frequency related coefficients representing the actual value of the pixels. For instance, if the transmitted signal represents the difference between the current frame and an earlier frame, the actual pixel values, and hence the mathematical distribution of the resulting frequency coefficients, cannot be obtained without first decompressing the received signal to produce the actual pixel values, and then dividing the signal into blocks and transforming the signal into the frequency domain to produce the frequency related coefficients.

In a preferred embodiment, action is taken to conceal a block if an error is identified. This may involve the substitution of the detected block by a similarly positioned block in a previous frame or its motion compensated block. Alternatively, a new motion vector may be calculated by averaging motion vectors for the similarly positioned block and surrounding blocks from a previous frame to produce a motion vector relating to a block in the previous frame with which the current-block is to be replaced.

The invention will now be described by way of example only, with reference to the accompanying drawings, of which:

Figure 1 shows a system for transmitting and receiving compressed video data, including a circuit for detecting and concealing errors;
Figure 2 shows how an image is made up from a plurality of blocks;
Figure 3 shows a first embodiment of a circuit for detecting and concealing errors for use in a system as shown in Figure 1, including a processing unit;

Figure 4 details the operation of the processing unit shown in Figure 3, for detecting the presence of an error;

Figure 5 details the operations of the processing unit shown in Figure 3, for concealing an error.

Figure 6 shows a system including a second embodiment of apparatus for detecting and concealing errors;

Figure 7 shows in greater detail the apparatus shown in Figure 6 for detecting and concealing errors.

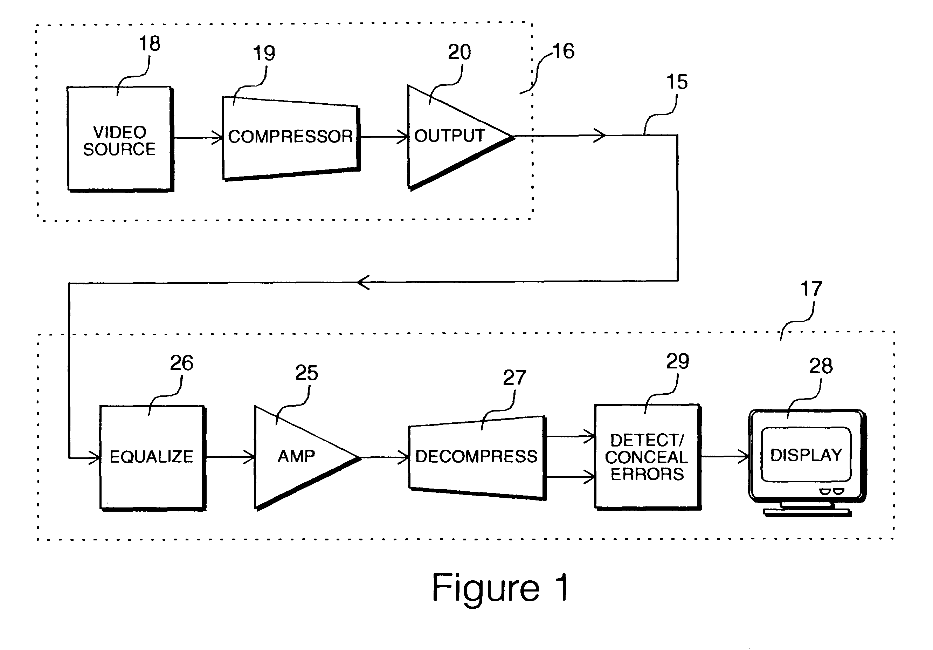

A system for transmitting compressed video data over a transmission path 15 from a transmitting station 16 to a receiving station 17 is shown in Figure 1. A conventional video signal is generated by a video source 18, which may be a video camera, a video tape player or similar equipment. The transmission path 15 has a limited bandwidth, therefore video data is compressed so as to be retained within the available bandwidth. The transmission path may be a telephone line, a dedicated digital link, a radio link or any other known means of providing a communication channel. By convention, the compressed video signal is in non-interlaced form, with each video frame having 288 lines with 352 picture elements on each line. In non-compressed form, each picture element has a luminance value represented by eight bits of data, with a smaller number of bits allocated to represent each colour difference signal.

The video data generated by the video source 18 is compressed by a compression circuit 19 which may, for example, compress the video data in accordance with the CCITT H.261 compression recommendation although the invention is not limited to this form of compression. According to the H.261 recommendation, the video signal to be compressed is divided into portions representing blocks of pixels of the video image. Each block is transformed into the frequency domain by a discrete cosine transform (DCT) and the coefficients are transmitted. The blocks may be compressed without reference to any other block or frame (intra frame coding) or with reference to another block or frame, in which case the DCT coefficients represent the differences between the compared blocks. The original video data includes eight bits luminance for each picture element location and the block consists of an 8 x 8 array of picture elements. An array of coefficients is similarly proportioned but the resolution is such that a minimum of twelve bits may be required for a particular coefficient, plus a sign bit. Compression is achieved because many of the coefficients will have values of zero and may, therefore, effectively be ignored. An output circuit 20 amplifies and, where required, modulates the compressed video signal, thereby placing it in a form suitable for transmission over the transmission path 15.

It is likely that the level of attenuation suffered by the transmitted signal will be frequency dependent, therefore an equalisation circuit 26 at the receiving station provides compensation. The received signal is then de-modulated (if required) by means not shown and amplified by an amplifying circuit 25.

De-compression is performed by a de-compression circuit 27, arranged to perform the reverse process to the compression provided by the compression circuit 19. Any errors introduced into the signal, due to noise on the transmission channel 15, may result in corruption of the data. This would result in the corrupted data being visible on a display device 28. Thus, the overall integrity of the displayed image would be improved if the corrupted data could be detected and concealed in some way.

To provide such a detection and concealing process, the system includes an error detecting and concealing circuit 29, arranged to identify a block of corrupted data and to conceal this block of corrupted data by selecting an equivalent block from a previously transmitted frame.

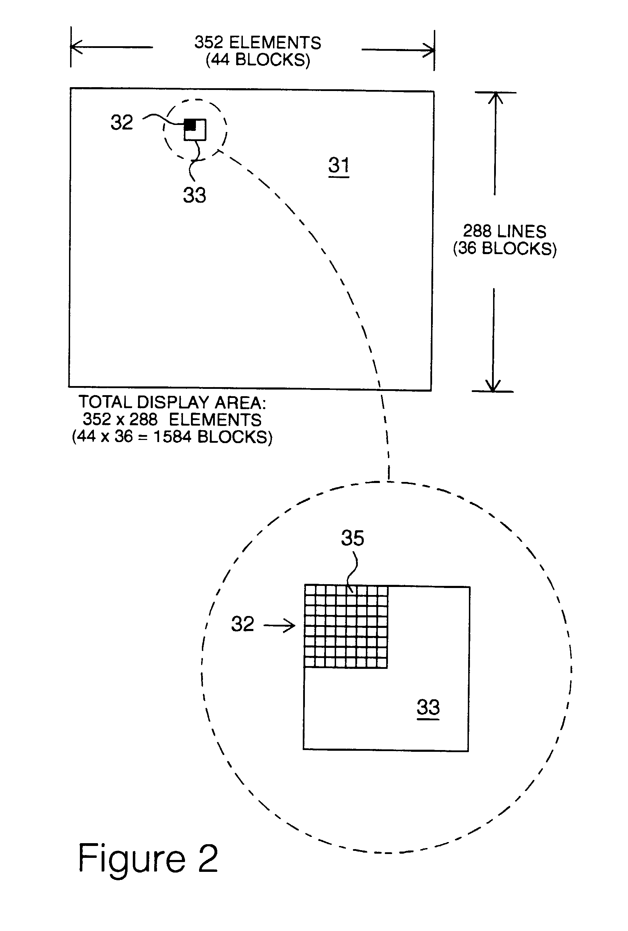

A conventional video frame 31, as shown in Figure 2, consists of 288 lines with 352 elements on each line. As part of the H. 261 compression procedure, the frame is divided into 1584 blocks, with sixty four picture elements, in the form of an 8 x 8 matrix, within each block.

A luminance block 32 is shown in Figure 2 and this, in combination with its three adjacent blocks, provides a macro block 32. The macro block 33 is shown enlarged, with block 34 displaying a full matrix of picture elements 35. In addition, a full colour picture also requires the transmission of two colour difference blocks per luminance block.

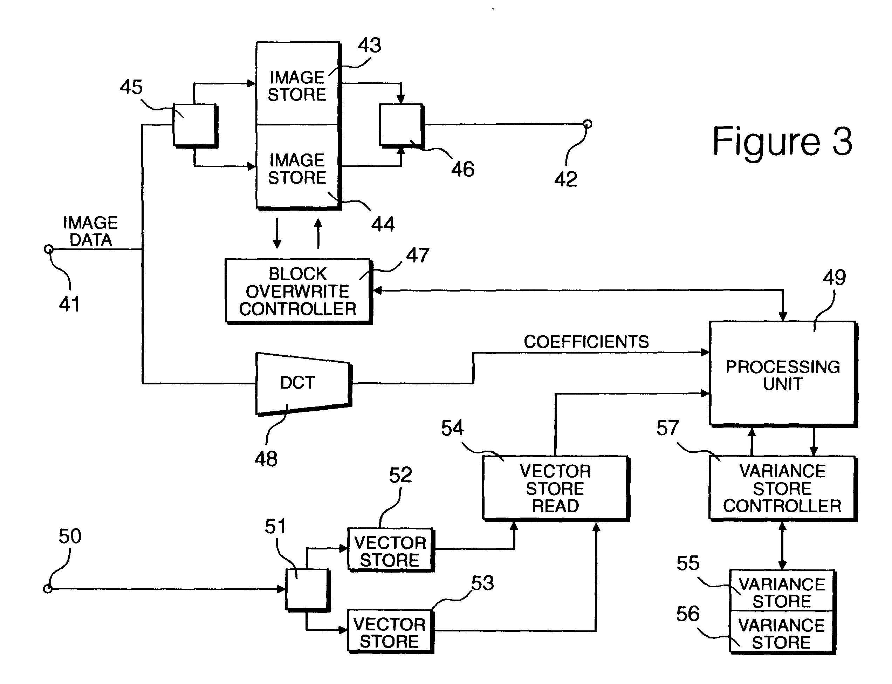

The error detecting and concealing circuit 29 is detailed in Figure 3, in which decompressed video data from the decompression circuit 27 is received at an input port 41 and processed video data for display on the display device 28 is applied to an output port 42. The circuit 29 includes a first image store 43 and a second image store 44, each capable of storing a full video frame. A video write controller 45 controls the writing of video data to the image stores, such that, a first frame is written to image store 43 and a second frame is written to store 44, while the first frame is being read from the first image store 43 under the control of a video read controller 46. After a full video frame has been written to the second image store 44, the next video frame is written to the first image store 43, overwriting the previously written frame and an output signal for port 42 is derived by reading the image from store 44.

While data is being written to one of the image stores 43 or 44, said data is also processed to detect the presence of errors. When an error is detected, blocks of data in the image stores 43 and 44 may be overwritten, under the control of a block overwrite controller 47. In order to identify the presence of errors, the input image data from port 41 is also supplied to a transform unit 48, arranged to transform the input image data into frequency related coefficients for each block of picture elements. In the preferred embodiment, the transform unit performs a discrete cosine transform (DCT) on the blocks of image data. The frequency related coefficients are then supplied to a processing unit 49.

In order to detect the presence of errors in the transmitted video data, the processing unit 49 is arranged to calculate the mean and variance of the coefficient values within each block. As these variance values are calculated, they are supplied to a first variance store 55 or to a second variance store 56, thereby ensuring that variance values calculated for the previous frame are available to the processing unit 49. The writing and reading of variance values to and from stores 55 and 56 is controlled by a variance store controller 57.

If the video information supplied over the transmission path 15 is compressed in a form such that, in addition to including spatially compressed coefficients, data representing motion vectors for each block of compressed data are also supplied, the motion vectors are also supplied to the error concealing circuit 29 via an input port 50.

Motion vectors are calculated by comparing a block of picture elements in a current frame with a similarly positioned block in a previous frame and with blocks, shifted by a plurality of picture element displacements in both the x and y directions. The motion vector is not related directly to movement of objects within the original image but actually represents the closest fit, derived by comparing the block of interest with similar blocks of the previous frame. A technique for performing such comparisons in order to produce motion vectors, is disclosed in US-A-5,083,202, assigned to the present applicant.

Thus, for each block of video data, x and y values are transmitted indicating a motion vector of the closest fitting block from the previous frame. These displacement vectors are supplied to a vector-store write-controller 51, wherein vectors derived from a first frame are written to a first vector store 52, vectors from the next frame are written to a second vector store 53, whereafter the first store is overwritten etc. Thus, vector values for the previous frame are available to the processing unit 49, via a vector store reading circuit 54.

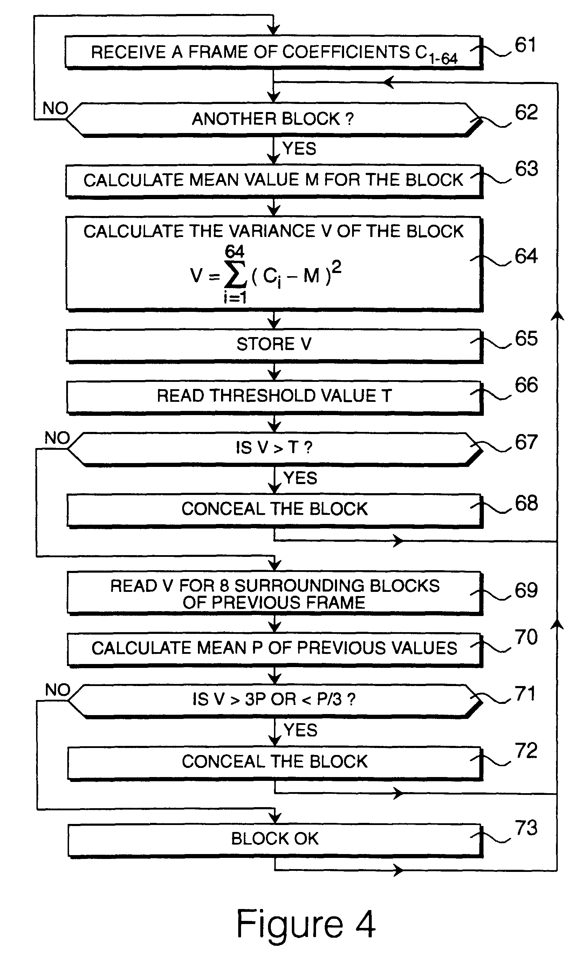

Operational procedures for the processing unit 49 are detailed in Figure 4. As a result of the transform performed by transform unit 48, a frame of coefficients will become available to processing unit 49, which initiates its processing procedures at step 61. A question is asked at step 62 as to whether another block of the frame is available and, for the first block of a frame, this question will be answered in the affirmative. When answered in the affirmative, the mean value for the coefficients in the block is calculated at step 63. The mean value for the coefficients of an 8x8 block is derived by adding the values of the coefficients together and then dividing by 64.

At step 64 the variance of the values is calculated by subtracting the mean value from each coefficient value to produce a difference value for each particular coefficient. This difference value is squared and the variance is obtained by adding all 64 squared terms.

At step 65 the variance value calculated for the particular block is stored in variance store 55 or 56, depending upon the phase of the particular frame under consideration.

At step 66 a threshold value T is read and at step 67 a question is asked as to whether the variance value calculated at step 64 is larger than the threshold value T. The threshold value T is adjustable or selectable by an operator and may be adjusted to suit a particular type of video transmission. If the variance value calculated at step 64 is larger than the threshold value read at step 66, it is assumed that the block under consideration contains errors, in that a large variance value has been produced due to the presence of errors. Thus, if the question asked at step 67 is answered in the affirmative, the block is concealed by invoking a conceal block routine at step 68.

If the question asked at step 67 is answered in the negative, a further check is performed on the variance value to determine whether said value represents the presence of an error. Previously, said variance value was compared against a threshold value, which is appropriate for identifying very severe errors which produce very large variance values. However, a block having coefficients with a modest variance may still be in error and such an error is detected if the variance is significantly different from the variance values of blocks surrounding the block under consideration, in the equivalent position of a previous frame.

Thus, at step 69, the processing unit accesses the variance store for the previous frame. Therefore, if the variance value calculated at step 64 was written to store 55, step 69 accesses variance values from store 56. The equivalent position to the block under consideration is identified and the variance values for it and the eight surrounding blocks are read from store 56.

At step 70 the mean value P for the previous frame variance values is calculated and a comparison of this previous mean value is made with the present variance value, at step 71. If the value for the block under consideration is greater than three times the previous mean value P or smaller than the previous mean value P divided by three, it is assumed that the block contains an error and the concealing algorithm is again invoked. Thus, if the value is greater than three times the previous mean or smaller than said previous mean divided by three, the question asked at step 71 is answered in the affirmative and the conceal block routine is called at step 72. Alternatively, if the question asked at step 71 is answered in the negative, the block is considered to be error free at step 73 and control is returned to step 62. Eventually, all of the blocks for a particular frame will have been considered and the question asked at step 62 will be answered in the negative, returning control to step 61 and placing the processing unit 49 in a state ready for the next frame of coefficients.

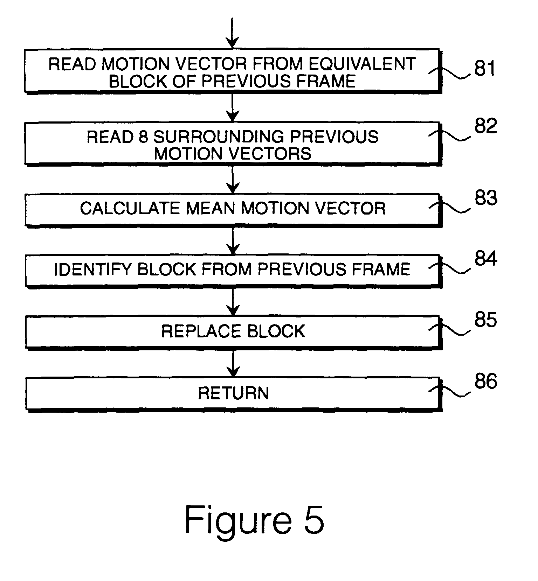

The concealing routine which may be called at step 68 or at step 72 is detailed in Figure 5. For the purposes of this example, it is assumed that image data is being written to image store 43 and that the processing unit 49 has identified a block of image data which contains an error. As data is written to image store 43, previously processed data is read from image store 44, thereby providing a video output signal to output port 42. A period of time is therefore available during which modifications may be made to the image data stored in store 43, before said data is selected by the output controller 46. As image data is written to store 43, motion vectors are written to vector store 52 and, similarly, as the writing of image data is switched to image store 44, the writing of motion vector data is switched to store 53.

Thus, an error is detected by the processing unit in a block of image data which has been written to the image store 43 and the processing unit 49 is now required to effect procedures to conceal the error before this data is supplied to the output port 42.

At step 81 of Figure 5, the vector store 52 is accessed so as to read the motion vector for the equivalent block of the previous frame.

At step 82 the motion vectors for the eight surrounding blocks are read from vector store 52, thereby providing a total of nine motion vectors to the processing unit 49.

At step 83 an average motion vector is calculated by adding said nine values and dividing by nine to produce an averaged motion vector for accessing image data of the previous frame. Thus, the average motion vector identifies the position of a block in the previous frame which, after being moved in the x and y directions by amounts specified by the motion vector, provides a close match to the block under consideration in the present frame.

Thus, the averaged motion vector identifies a block of data in the previous frame which, at this point in time, will be held in image store 44, the store presently being read to provide an output signal. Thus, at step 85 the data identified in store 44 is read by the block overwrite controller 47, in response to instructions received from the processing unit 49, and written to the block under consideration in the input image store 43.

It is important to note that the block read from the output image store 44 will not necessarily lie within an original block boundary, given that the motion vectors are specified for picture element positions.

After the image block has been overwritten, control is returned to step 62, allowing another block to be considered.

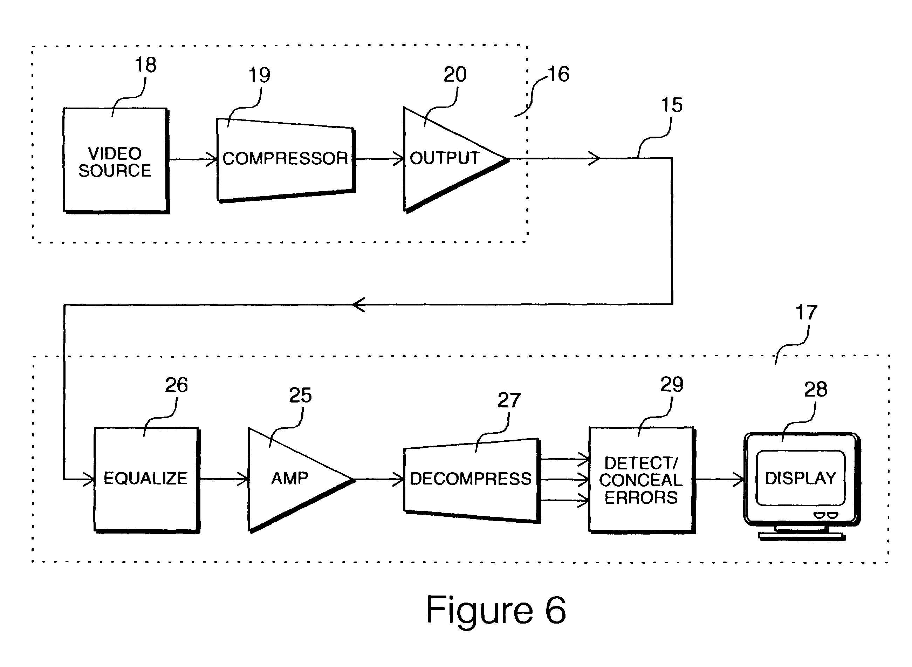

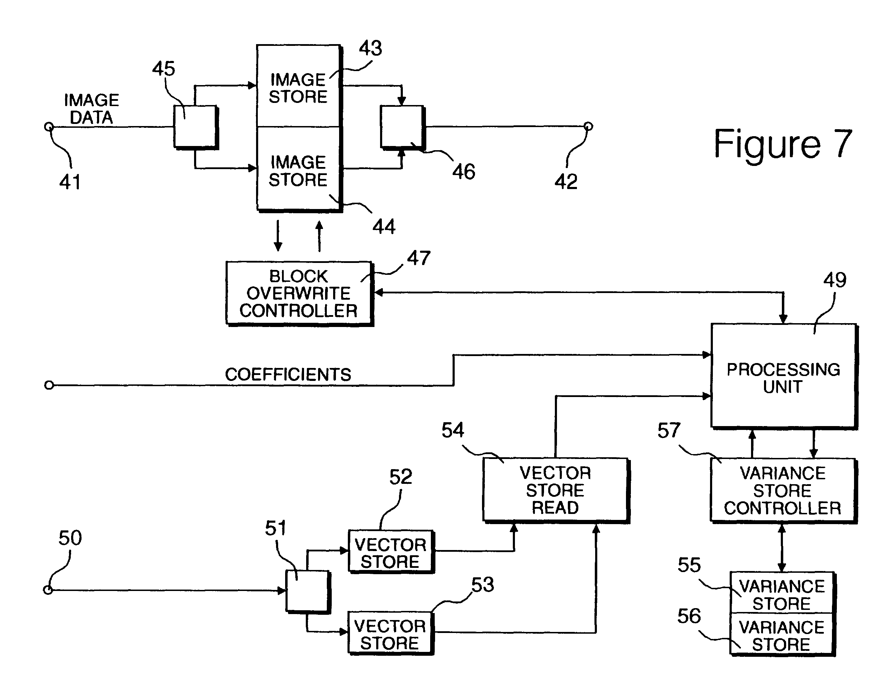

Figure 6 shows a system in which the compressed transmitted signal comprises frequency related coefficients that represent the actual pixel values of the frame. Little or no further processing of the DCT coefficients is therefore required before they are input to the processing unit 49, as shown in Figure 7. The operation of the circuit as shown in Figure 7 is otherwise the same as that shown in Figure 3.

The decompression circuit 27 may include some conventional form of error checking, for instance error correction code checking means. In this case, the decompression circuit flags a macroblock or a Group of blocks (GOB) that is identified as containing an error, (a Group of blocks comprises a matrix of 11 macroblocks by 3 macroblocks). Only those blocks of a flagged macroblock or GOB are passed to the error detecting and concealing circuit 29 to determine which block within the macroblock or GOB contains an error. Those blocks that are not corrupted may therefore be retained, whereas those blocks in which an error is detected can be concealed.

## Claims

1. A method of detecting an error in a signal representing a video image, comprising:

   receiving blocks of frequency related coefficients representing respective blocks of the image; and
   analysing the statistical distribution of said coefficients within a block to detect the presence of corrupted data.

2. A method according to claim 1, wherein said analysing step involves calculating the variance of said coefficients in a block.

3. A method according to claim 2, further comprising comparing the calculated variance of a block with a predetermined threshold value, an error being detected if the calculated variance exceeds the predetermined threshold value.

4. A method according to claim 2 or 3 further comprising comparing the calculated variance of a block of a current frame with the variance value(s) calculated for at least one similarly positioned block(s) in a previous frame, an error being detected if the calculated variance for a block of the current frame differs from the variance of the similarly positioned block(s) of a previous frame by a predetermined amount.

5. A method according to any preceding claim **further** comprising firstly dividing the signal into a plurality of portions corresponding to respective blocks (32) of an image; and transforming said portions into blocks of frequency related coefficients.

6. Apparatus for identifying the presence of an error in a signal representing a video image, characterised by:

   means (49) for analysing the statistical distribution of frequency related coefficients representing respective blocks of the image to identify corrupted data.

7. Apparatus according to claim 6, wherein said analysing means includes means for calculating the variance of the coefficients in a block.

8. Apparatus according to claim 7, wherein said analysing means includes means for comparing said variance value against a predetermined threshold value.

9. Apparatus according to claim 7 or 8, wherein said analysing means includes means for comparing said variance value against variance value(s) obtained for at least one similarly positioned block(s) in a previous frame.

10. Apparatus according to any one of claims 6 to 9, including means for storing image data and means operable in response to detection of an error within a block to substitute for that block a stored block from an earlier frame of the image.

11. Apparatus according to claim 10, including means (52, 53, 54) for reading motion vectors included with transmitted video data, and processing means (49, 47) for concealing blocks identified as containing errors by selecting a stored block in response to said motion vectors.

12. Apparatus according to claim 11, wherein a new motion vector is calculated by averaging the motion vectors associated with similarly positioned blocks within the previous frame.

13. Apparatus according to any of claims 6 to 12 further comprising:

means (48) for firstly dividing a signal into a plurality of portions corresponding to respective blocks (32) of an image; and
means (48) for transforming said portions into blocks of frequency related coefficients.

**Patentansprüche**

1. Verfahren zum Erfassen eines Fehlers in einem Signal, das einem Videobild entspricht, das umfaßt:

Empfangen von Blöcken von frequenzbezogenen Koeffizienten, die Blöcken des Bildes entsprechen, und
Analysieren der statistischen Verteilung der Koeffizienten innerhalb eines Blockes, um die Anwesenheit von veränderten Daten zu erfassen.

2. Verfahren nach Anspruch 1, bei dem der Schritt des Analysierens das Berechnen der Varianz der Koeffizienten in einem Block beinhaltet.

3. Verfahren nach Anspruch 2, das außerdem das Vergleichen der berechneten Varianz eines Blockes mit einem vorgegebenen Schwellenwert beinhaltet, wobei ein Fehler erfaßt wird, wenn die berechnete Varianz den vorgegebenen Schwellenwert überschreitet.

4. Verfahren nach Anspruch 2 oder 3, das außerdem das Vergleichen der berechneten Varianz eines Blockes eines aktuellen Rahmens mit dem/den Varianzwert(en) für wenigstens einen ähnlich positionierten Block in einem vorherigen Rahmen umfaßt, wobei ein Fehler erfaßt wird, wenn die berechnete Varianz für einen Block des aktuellen Rahmens sich von der Varianz des ähnlich positionierten Blocks (den Blöcken) eines vorherigen Rahmens um einen vorgegebenen Betrag unterscheidet.

5. Verfahren nach einem der vorangehenden Ansprüche, das außerdem umfaßt: zunächst Teilen des Signals in mehrere Abschnitte, die jeweiligen Blöcken (32) eines Bildes entsprechen, und Transformieren der Abschnitte in Blökke von frequenzbezogenen Koeffizienten.

6. Vorrichtung zum Erfassen der Anwesenheit eines Fehlers in einem Signal, das einem Videobild entspricht, gekennzeichnet, durch:
eine Vorrichtung (49) zum Analysieren der statistischen Verteilung von frequenzbezogenen Koeffizienten, die entsprechenden Blöcken des Bildes entsprechen, um veränderte Daten zu identifizieren.

7. Vorrichtung nach Anspruch 6, bei der die Analysevorrichtung eine Vorrichtung zum Berechnen der Varianz der Koeffizienten in einem Block umfaßt.

8. Vorrichtung nach Anspruch 7, bei der die Analysevorrichtung eine Vorrichtung zum Vergleichen des Varianzwertes mit einem vorgegebenen Schwellenwert umfaßt.

9. Vorrichtung nach Anspruch 7 oder 8, bei der die Analysevorrichtung eine Vorrichtung zum Vergleichen des Varianzwertes mit (einem) Varianzwert(en) von wenigstens einem ähnlich positionierten Block in einem vorherigen Rahmen umfaßt.

10. Vorrichtung nach einem der Ansprüche 6 bis 9, die eine Vorrichtung zum Speichern von Bilddaten und eine Vorrichtung, die in Abhängigkeit von der Erfassung eines Fehlers innerhalb eines Blockes arbeitet, um für diesen Block einen gespeicherten Block aus einem früheren Rahmen des Bildes zu ersetzen, umfaßt.

11. Vorrichtung nach Anspruch 10, die eine Vorrichtung (52, 53, 54) zum Lesen von Bewegungsvektoren, die in übertragenen Videodaten enthalten sind, und eine Verarbeitungsvorrichtung (49, 47) zum Verbergen von Blöcken, die als fehlerbehaftet identifiziert worden sind, durch Auswahl eines gespeicherten Blockes in Abhängigkeit von den Bewegungsvektoren umfaßt.

12. Vorrichtung nach Anspruch 11, bei der ein neuer Bewegungsvektor berechnet wird durch Mittelung der Bewegungsvektoren, die mit ähnlich positionierten Blöcken innerhalb des vorigen Rahmens zusammenhängen.

13. Vorrichtung nach einem der Ansprüche 6 bis 12, die außerdem umfaßt:

> eine Vorrichtung (48), um zunächst ein Signal in mehrere Abschnitte zu teilen, die jeweiligen Blöcken (32) eines Bildes entsprechen, und eine Vorrichtung zum Transformieren der Abschnitte in Blöcke von frequenzbezogenen Koeffizienten.

**Revendications**

1. Procédé de détection d'une erreur dans un signal représentant une image vidéo, comprenant :

> la réception de blocs de coefficients liés à la fréquence représentant des blocs respectifs de l'image, et
> l'analyse de la distribution statistique desdits coefficients à l'intérieur d'un bloc afin de détecter la présence de données corrompues.

2. Procédé selon la revendication 1, dans lequel ladite étape d'analyse implique le calcul de la variance desdits coefficients dans un bloc.

3. Procédé selon la revendication 2, comprenant en outre la comparaison de la variance calculée d'un bloc avec une valeur de seuil prédéterminée, une erreur étant détectée si la variance calculée dépasse la valeur de seuil prédéterminée.

4. Procédé selon la revendication 2 ou 3, comprenant en outre la comparaison de la variance calculée d'un bloc d'une trame en cours avec la ou les valeurs de variance calculées pour au moins un bloc ou des blocs positionnés de façon similaire dans une trame précédente, une erreur étant détectée si la variance calculée pour un bloc de la trame en cours diffère de la variance du ou des blocs positionnés de façon similaire d'une trame précédente, d'une quantité prédéterminée.

5. Procédé selon l'une quelconque des revendications précédentes, comprenant en outre tout d'abord la division du signal en une pluralité de parties correspondant à des blocs respectifs (32) d'une image, et la transformation desdites parties en blocs de coefficients liés à la fréquence.

6. Dispositif destiné à identifier la présence d'une erreur dans un signal représentant une image vidéo, caractérisé par :

> un moyen (49) destiné à analyser la distribution statistique de coefficients liés à la fréquence représentant des blocs respectifs de l'image afin d'identifier des données corrompues.

7. Dispositif selon la revendication 6, dans lequel ledit moyen d'analyse comprend un moyen destiné à calculer la variance des coefficients dans un bloc.

8. Dispositif selon la revendication 7, dans lequel ledit moyen d'analyse comprend un moyen destiné à comparer ladite valeur de variance à une valeur de seuil prédéterminée.

9. Dispositif selon la revendication 7 ou 8, dans lequel ledit moyen d'analyse comprend un moyen destiné à comparer ladite valeur de variance à une ou des valeurs de variance obtenues pour au moins un ou des blocs positionnés de façon similaire dans une trame précédente.

10. Dispositif selon l'une quelconque des revendications 6 à 9, comprenant un moyen destiné à mémoriser des données d'image et un moyen pouvant être mis en oeuvre en réponse à la détection d'une erreur à l'intérieur d'un bloc de façon à remplacer ce bloc par un bloc mémorisé provenant d'une trame antérieure de l'image.

11. Dispositif selon la revendication 10, comprenant des moyens (52, 53, 54) destinés à lire des vecteurs de mouvement inclus dans les données vidéo transmises, et des moyens de traitement (49, 47) destinés à masquer les blocs identifiés comme contenant des erreurs en sélectionnant un bloc mémorisé en réponse audit vecteur de mouvement.

12. Dispositif selon la revendication 11, dans lequel un nouveau vecteur de mouvement est calculé en mettant en moyenne les vecteurs de mouvement associés à des blocs positionnés de façon similaire à l'intérieur de la trame précédente.

13. Dispositif selon l'une quelconque des revendications 6 à 12, comprenant en outre :

un moyen (48) destiné à diviser tout d'abord un signal en une pluralité de parties correspondant à des blocs respectifs (32) d'une image, et

un moyen (48) destiné à transformer lesdites parties en blocs de coefficients liés à la fréquence.

Figure 1

352 ELEMENTS
(44 BLOCKS)

288 LINES
(36 BLOCKS)

32

33

<u>31</u>

TOTAL DISPLAY AREA:
352 x 288 ELEMENTS
(44 x 36 = 1584 BLOCKS)

35

32 →

<u>33</u>

# Figure 2

Figure 3

EP 0 710 422 B1

RECEIVE A FRAME OF COEFFICIENTS $C_{1-64}$ — 61

NO ← ANOTHER BLOCK ? — 62

↓ YES

CALCULATE MEAN VALUE M FOR THE BLOCK — 63

CALCULATE THE VARIANCE V OF THE BLOCK

$$V = \sum_{i=1}^{64} ( C_i - M )^2$$

— 64

STORE V — 65

READ THRESHOLD VALUE T — 66

NO ← IS V > T ? — 67

↓ YES

CONCEAL THE BLOCK — 68

READ V FOR 8 SURROUNDING BLOCKS OF PREVIOUS FRAME — 69

CALCULATE MEAN P OF PREVIOUS VALUES — 70

NO ← IS V > 3P OR < P/3 ? — 71

↓ YES

CONCEAL THE BLOCK — 72

BLOCK OK — 73

Figure 4

READ MOTION VECTOR FROM EQUIVALENT BLOCK OF PREVIOUS FRAME — 81

READ 8 SURROUNDING PREVIOUS MOTION VECTORS — 82

CALCULATE MEAN MOTION VECTOR — 83

IDENTIFY BLOCK FROM PREVIOUS FRAME — 84

REPLACE BLOCK — 85

RETURN — 86

# Figure 5

Figure 6

EP 0 710 422 B1

Figure 7